# EUROPÄISCHE PATENTSCHRIFT

(11) **EP 1 366 245 B1**
(45) Veröffentlichungstag und Bekanntmachung des Hinweises auf die Patenterteilung: **24.01.2007**
(21) Anmeldenummer: 02729962.7
(22) Anmeldetag: 05.03.2002
(51) Int. Cl.: E03F 5/12

(54) **ABWASSERANLAGE MIT REINIGUNGSVORRICHTUNG**
WASTE WATER INSTALLATION WITH PURIFICATION DEVICE
INSTALLATION D'EPURATION DES EAUX USEES EQUIPEE D'UN DISPOSITIF DE PURIFICATION

(30) Priorität: 07.03.2001 DE 20103875 U
(43) Veröffentlichungstag der Anmeldung: 03.12.2003
(73) Patentinhaber: Kolb, Frank Reiner, 65232 Taunusstein (DE)
(72) Erfinder: KOLB, Frank, Reiner, 65232 Taunusstein (DE)
(74) Vertreter: Mollekopf, Gerd Willi
(86) Internationale Anmeldenummer: PCT/EP2002/002388
(87) Internationale Veröffentlichungsnummer: WO 2002/077379

(56) Entgegenhaltungen:
- EP-A- 0 709 529
- EP-A- 1 039 052
- WO-A-94/07585
- DE-A- 4 124 006
- FR-A- 2 744 147

## Beschreibung

Die Erfindung bezieht sich auf eine Abwasseranlage mit einer Zuflußseite und einer Abflußseite und einer dazwischen angeordneten Reinigungsvorrichtung gemäß dem Oberbegriff des Anspruchs 1. Derartige Abwasseranlagen werden eingesetzt, um bei stärkeren Niederschlägen das vermehrt anfallende Regenwasser abzuleiten, da dies beispielsweise von einer Kläranlage nicht mehr bewältigt werden kann. Das vermehrt anfallende Regenwasser ist allerdings mit Schmutzwasser durchmischt, so daß es mit Schwebstoffen beispielsweise Holzstücken, Sand, Papier oder Kunststoffolien verunreinigt ist. Diese Verunreinigungen werden von derartigen Abwasseranlagen mittels einer Reinigungsvorrichtung, beispielsweise einem Siebrechen, aus dem beispielsweise in ein Gewässer abgeleiteten Regenwasser, entnommen, beziehungsweise zurückgehalten. Zwischen dem Zuflußbereich des Abwassers und dem Abflußbereich, von dem aus das zur Entlastung abgeleitete Regenwasser abgeführt wird, ist die oben erwähnte Reinigungsvorrichtung angeordnet. Eine derartige Vorrichtung ist aus der WO 94/07585 bekannt.

Die dort gezeigt Vorrichtung besitzt zwischen der Zuflußseite und der Abflußseite eine Zwischenwand, auf der eine Reinigungsvorrichtung in Form eines Siebrechens angeordnet ist. Zusätzlich zur Wirkung der Zwischenwand ist zur Erhöhung des Stauvolumens vorgesehen, eine in Fließrichtung hinter dem Siebrechen ein zur Vertikalebene geneigtes Stauelement vorzusehen. Mit dessen Hilfe soll erreicht werden, die Durchtrittsgeschwindigkeit des Wassers durch den Siebrechen zu vergleichmäßigen und eine gleichmäßigere Druckverteilung über die gesamte Fläche des Siebrechens zu erhalten.

Die gezeigte Vorrichtung hat allerdings den Nachteil, daß insbesondere Schweb- und Sinkstoffe, wie z. B. Sand, das geneigt ausgebildete Stauelement nicht überwinden können, so daß diese im Bereich des Siebrechens verbleiben und dort zu Störungen insbesondere des Rechenreinigers, führen. Die verbleibenden Sinkstoffe führen zu einem erhöhten Verschleiß zwischen Siebrechen und Rechenreiniger. Darüber hinaus erhöht zwar das Stauelement das Rückhaltevermögen der Abwasseranlage, wird das Stauelement jedoch überflutet, bildet das Stauelement eine Drosselvorrichtung, so daß die Durchflußmenge durch den Rechen verringert wird und die Gefahr besteht, daß der Siebrechen über seine Oberkante überflutet wird, wodurch ungereinigtes Wasser abgeführt wird.

Die FR 2 744 147 A1 offenbart eine Anordnung einer kombinierten Überlauf-/Rückströmklappe, die den Überlauf aus einem Kanalrohr in ein Überlaufrohr ermöglicht und anderseits einen Rücklauf z.B. von Meerwasser aus dem Überlaufrohr in das Kanalrohr verhindert. Sobald der Abwasserpegel im Kanalrohr über einen kritischen Pegel steigt, schwenkt die Klappe um eine Schwenkachse und bleibt in dieser Stellung schwerkraftbedingt geöffnet, so dass das aufgestaute Abwasser vollständig über die geschwenkte Klappe hinweg abfließen kann. Bei geschlossener Klappe verschließt deren unterer Teil den unteren Teil des Abflussquerschnitts durch Anlage an eine Dichtung. Eine Rückschlagklappe wirkt in Rückströmrichtung, um das Eindringen von Meerwasser (bei Flut) in das Kanalisationssystem zu verhindern. Dadurch kann die Rückströmung auf den oberen Teil der Klappe wirken, um diese gegen die Dichtfläche zu schließen.

Bei der EP 0 709 529 A1 fließt Abwasser über ein im Boden versenkbares Wehr ab. Im Bereich vor dem teilgeöffneten Wehr wird dabei eine beruhigte Sammelzone für Ablagerungen geschaffen. Wenn das Stauelement vollständig abgesenkt ist, ist der Rückstau vollständig durch Abfließen des Abwassers abgebaut.

Die EP 1 039 052 A2 betrifft eine Freispüleinrichtung, die ein Hauptbecken von Zeit zu Zeit freispült, in dem in einer Vorkammer Flüssigkeit aufgestaut und schwallartig in das Hauptbecken abgegeben wird.

Aufgabe der vorliegenden Erfindung ist es, die genannten Nachteile der bekannten Abwasseranlagen zu vermeiden und außerdem trotz Erhöhung des Stauvolumens den Durchfluß durch die Reinigungsvorrichtung der Abwasseranlage nicht zu behindern. Die Aufgabe wird gemäß der Erfindung mit den Merkmalen des Anspruchs 1 bzw. 6 gelöst. Vorteilhafte Ausgestaltungen sind Gegenstand von Unteransprüchen.

Dadurch, daß das Stauelement im Bereich der Bodenfläche mit dieser wenigstens teilweise lösbar in Verbindung steht, wird ermöglicht, zwischen Bodenfläche und Stauelement einen Abstand zu erzeugen, so daß Wasser in diesem Bereich durchfließen kann. Dadurch entsteht im Bereich der Bodenfläche eine Strömung oder es erhöht sich dort die Fließgeschwindigkeit erheblich, so daß abgelagerte Sinkstoffe abgeführt werden können. Diese gelangen somit auch aus dem Bereich der Reinigungsvorrichtung, wo sie zu erhöhtem Verschleiß oder Störungen an der Reinigungsvorrichtung führen können. Ermöglicht wird das ganze dadurch, daß das Stauelement beweglich gelagert ist und somit wenigstens eine zeitweise Freigabe des Durchflußes im Bereich der Bodenfläche ermöglicht werden kann. Durch die Ausgestaltung des Stauelementes, so daß es im Bereich der Bodenfläche lösbar mit der Bodenfläche in Verbindung steht, kann mit dem Stauelement gemäß der Erfindung auch bei relativ geringem Wasserstand ein Aufstauen von Wasser in der Abwasseranlage erreicht werden und gleichzeitig dafür gesorgt werden, daß die Nachteile des Aufstauens, beispielsweise das Ablagern von Sinkstoffen oder die Verringerung des Durchflußquerschnitts mit der Vorrichtung der vorliegenden Erfindung beseitigt werden.

Das Stauelement ist mehrteilig ausgebildet, wodurch beispielsweise ermöglicht wird, lediglich einen schmalen Bereich des Stauelements beweglich auszubilden, insbesondere im Bereich der Bodenfläche, während der übrige Teil des Stauelements fest installiert ist wodurch ein gutes Aufstauen ermöglicht werden kann und gleichzeitig die Vorrichtung kostengünstig ausgestaltet werden kann, obwohl das Stauelement dadurch im wesentlichen einfach ausgestaltet werden kann, kann es dabei gleichzeitig stabil und leicht ausgebildet sein und dabei auf einfache in der Abwasseranlage fixiert werden.

Die Aufteilung des Stauelements in mehrere einzelne Bestandteile kann dabei aber nicht nur in horizontaler Richtung erfolgen, sondern auch in vertikaler Weise.

In vorteilhafter Weiterbildung der Erfindung ist das Stauelement verschieblich gelagert, wodurch je nach Platzverhältnissen oder zum Ausnützen besonderer Antriebsmittel des Stauelements günstig ausgestaltet werden kann. In besonders günstiger Ausgestaltung der Erfindung ist das Stauelement um eine Achse schwenkbar gelagert. Auf diese Art ist eine besonders sichere Befestigung möglich und gleichzeitig wird erreicht, daß mit Hilfe einer einfachen Bewegungsform die Erfordernisse der Erfindung ermöglicht werden. Bei einer schwenkbaren Lagerung ist es außerdem möglich, den Antrieb zum Verstellen des Stauelements einfach dadurch zu ermöglichen, daß das am Stauelement sich aufstauende Wasser auf eine Fläche des Stauelements drückt und dieses dadurch in erfindungsgemäßer Weise bewegt.

Besonders günstig ist die Ausbildung der Achse als im wesentlichen horizontale Achse oder je nach Ausgestaltung der Bodenfläche auch als parallel zur Bodenfläche verlaufende Achse. Die Vorteile der Erfindung sind insbesondere dadurch auf einfache Weise zu erreichen, daß die Schwenkachse einen Abstand zur Bodenfläche besitzt, so daß durch die Schwenkbewegung um diese Schwenkachse der Bereich der Bodenfläche vom Stauelement freigegeben werden kann, wobei der Strömungsdruck des aufgestauten Wassers, beziehungsweise dessen Strömung, die Bodenfläche gemäß der Erfindung von Sinkstoffen befreit.

In besonders vorteilhafter Weiterbildung der Erfindung ist das Stauelement mehrteilig ausgebildet. Dabei kann eine Teilung des Stauelements sowohl in horizontaler als auch in vertikaler Richtung erfolgen. Bei einer Aufteilung des Stauelements in Teilflächen wird ermöglicht, daß beispielsweise nur der Bereich in der Nähe der Bodenfläche von einem beweglichen Stauelement aufgestaut wird, während der darüber liegende Bereich von einem fix montierten Stauelement aufgestaut wird. Dadurch ist es insgesamt kostengünstig, das Stauelement mit seiner Stauwirkung herzustellen. Um eine Reinigung von Sinkstoffen zu ermöglichen, ist es nämlich nicht erforderlich das gesamte Stauelement beweglich auszugestalten, sondern es genügt vielfach nur den Bereich des Stauelements, der zwischen Schwenkachse und Bodenfläche beweglich auszubilden.

Durch die vorteilhafte Ausgestaltung der Abwasseranlage, bei der das Stauelement mit Abstand zur Reinigungsvorrichtung angeordnet ist, wird erreicht, daß genügend Bewegungsfreiraum für das Bewegen des Stauelementes zur Verfügung steht. Darüber hinaus hat dies den Vorteil, daß ein Absetzen der Sinkstoffe im Bereich zwischen Reinigungsvorrichtung und Stauelement erfolgen kann, so daß die Sinkstoffe sicher aus dem Bereich der Reinigungsvorrichtung, und damit aus dem Bereich bei dem Verschleiß möglich ist, gelangen. Durch diese Ausgestaltung wird ein Sammelraum für die Sinkstoffe geschaffen.

In besonders günstiger Ausgestaltung der Erfindung ist das Stauelement aus einem metallischen Werkstoff ausgebildet und als Klappe ausgestaltet. Eine Klappe kann besonders einfach durch das strömende Medium geöffnet werden, so daß die Wirkung des beweglichen Stauelements, nämlich beispielsweise der erhöhte Durchfluß oder die Reinigung von Sinkstoffen, besonders einfach ermöglicht wird. Durch die erfindungsgemäße Ausgestaltung der Abwasseranlage mit einem Sammelraum zwischen Reinigungsvorrichtung und Stauelement wird sicher erreicht, daß die Sink- und Schwebstoffe in genügender Menge abgelagert werden können, bevor sie zu Störungen in der Reinigungsvorrichtung führen können. Vorteilhaft besitzt entsprechend das Stauelement auch eine Reinigungsstellung, die speziell derart eingerichtet ist, daß besonders der Sammelraum, unabhängig von den übrigen Durchflußeigenschaften der Abwasseranlage, besonders kräftig durchströmt und dadurch besonders gründlich gereinigt wird.

In besonders günstiger Weiterbildung der Erfindung ist eine Steuervorrichtung vorgesehen, die das Stauelement beispielsweise über eine Antriebsvorrichtung derart steuert, daß in gewünschter Weise je nach Höhe der anfallenden Wassermenge, eine Verminderung der Stauwirkung des Stauelementes erreicht wird. Dabei kann vorgesehen werden, daß die Steuervorrichtung auch Sensoren enthält, durch die eine Regelung der Höhe der Flüssigkeit und der Durchflußgeschwindigkeit des aufgestauten Wassers ermöglicht wird.

In günstiger Weiterbildung der Erfindung ist das Stauelement mit einer Leitvorrichtung ausgestattet, die es ermöglicht, durch das Ausnützen der Eigenschaften des aufgestauten oder bereits strömenden Wassers das Stauelement in einer Position zu halten, bei der es um die Schwenkachse geschwenkt ist, so daß die Reinigungswirkung und die Steuerung des Durchflußes durchgeführt werden kann. Ein Einsatz von Fremdenergie oder auch von Steuer- oder Regelvorrichtungen muß also nicht zusätzlich vorgesehen werden. Die Leitvorrichtung kann dabei vorteilhaft, beispielsweise als eine Art Tragfläche ausgestaltet sein, die ein Anheben des verschwenkten Stauelements ermöglicht, so daß dessen Eigengewicht beispielsweise, nicht zum Zurückschwenken des Stauelements und damit zur Unterbrechung des Durchflußes zwischen Stauvorrichtung und Bodenfläche kommt.

Bei einer besonders vorteilhaften Ausgestaltung der Erfindung ist vorgesehen, daß das Stauelement wenigstens teilweise in der Ebene der Bodenfläche oder unterhalb angeordnet ist. Dadurch wird erreicht, daß der Teil des Stauelements z. B. eine Teilfläche, die beweglich gelagert ist, das Wasser bereits im Bereich der Bodenfläche ableitet und abgelagerte Sinkstoffe für das Abführen nur einen kurzen Weg zurücklegen müssen. Im Bereich der Bodenfläche ist es besonders einfach eine dort verlaufende Achse zu befestigen und zu lagern, weil die Bodenfläche eine stabile Auflage für die Achse des schwenkbar gelagerten Stauelements bildet. In einer vorteilhaften Ausgestaltung der Erfindung verläuft die Achse im wesentlichen senkrecht im Verhältnis zur Reinigungsvorrichtung. Diese Ausgestaltung erleichtert das Verschwenken des Stauelements und mindert den Einfluß der Strömung auf das Stauelements.

Im folgenden wird die Erfindung anhand von zeichnerischen Darstellungen erläutert. Es zeigen:
- **Figur 1**: eine Prinzipdarstellung einer erfindungsgemäßen Abwasseranlage im Schnitt;
- **Figur 2**: ist gestrichen;
- **Figur 3**: eine ähnliche Darstellung wie Figur 2 mit einem anderen Stauelement;
- **Figur 4**: eine Schnittdarstellung eines verschieblich gelagerten Stauelements;
- **Figur 5**: ist gestrichen;
- **Figur 6**: eine Prinzipdarstellung ähnlich Figur 1 mit einer Steuervorrichtung;
- **Figur 7**: eine Prinzipdarstellung ähnlich Figur 1 mit einem Stauelement, dessen Achse in der Bodenfläche verläuft;
- **Figur 8**: eine Draufsicht auf die Bodenfläche mit darin angeordneten beweglichen Teilen des Stauelements.

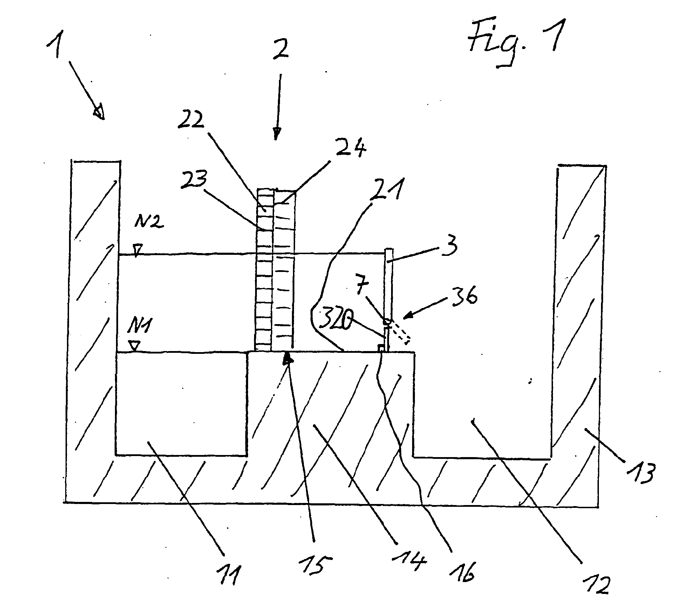

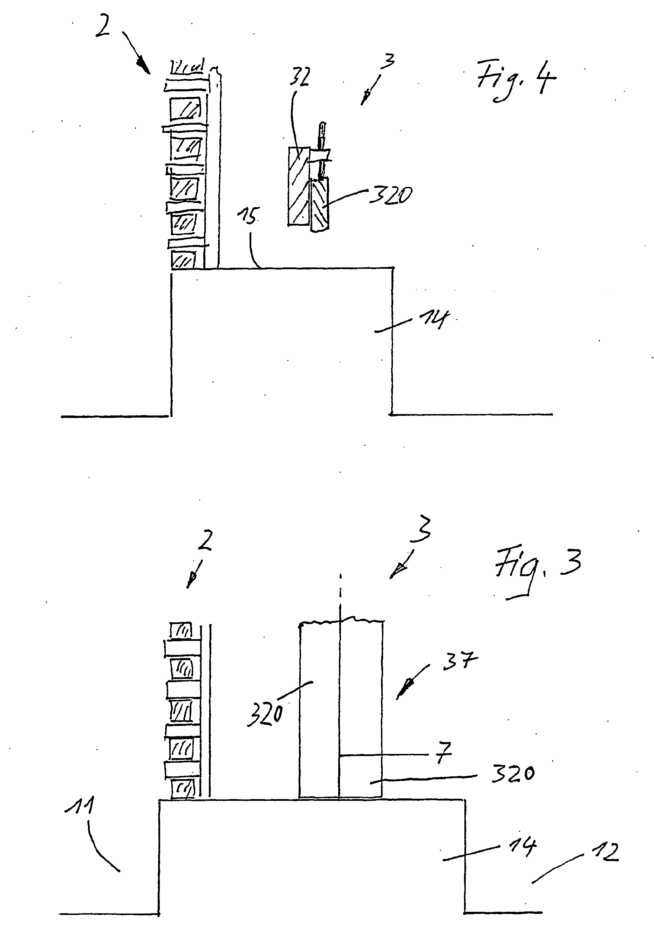

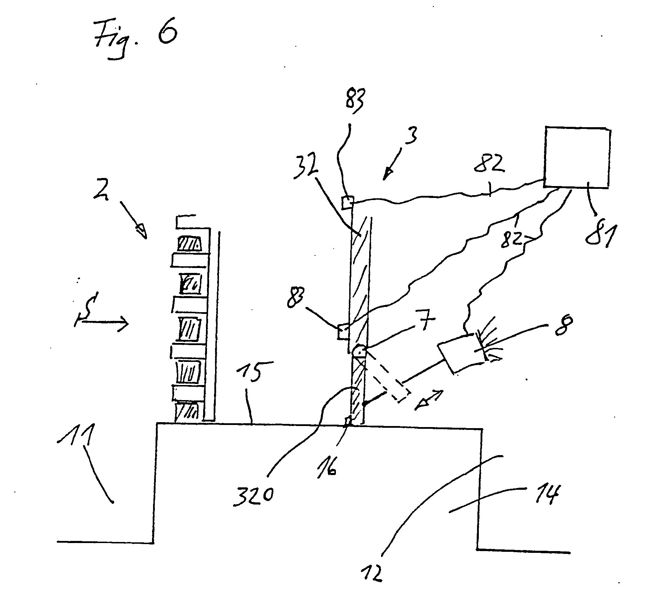

Figur 1 zeigt ein erstes Ausführungsbeispiel einer erfindungsgemäßen Abwasseranlage 1 in schematischer Darstellung, im Schnitt. Die Abwasseranlage 1 besitzt eine Zuflußseite 11 und eine Abflußseite 12, die in einem sogenannten Entlastungsbecken 13 angeordnet sind. Zuflußseite 11 und Abflußseite 12 sind voneinander durch eine Zwischenwand 14 abgetrennt. Auf der Oberseite der Zwischenwand 14, auf deren Bodenfläche 15, ist eine Reinigungsvorrichtung 2 angeordnet. Die Zuflußseite 11 ist mit einer nicht dargestellten Zuflußleitung in Verbindung, über die während beispielsweise Starkregenereignissen der Abwasseranlage 1 Regenwasser zugeführt wird. Das Regenwasser wird dabei ohne Trennung, mit normalem Abwasser vermischt, der Abwasseranlage 1 zugeführt. Im Normalfall wird das der Zuflußseite 11 zugeführte Wasser, also während Trockenperioden und leichten Regenfällen, aus der Zuflußseite 11 der Abwasseranlage 1 über einen nicht dargestellten Kanalanschluß in eine Kläranlage weitergeleitet. Die Zuflußseite 11 des Entlastungsbeckens 13 kann zusätzlich noch mit einem Rückhaltebecken in Verbindung stehen, welches dafür sorgt, den Mehranfall von zu reinigendem Wasser wenigstens teilweise zwischenzuspeichern, so daß möglichst viel des über die Zuflußseite der Abwasseranlage 1 zugeführten Wassers der Kläranlage zugeführt werden kann. Das Rückhaltebecken sorgt also dafür, daß der Anfall des zu reinigendem Wassers in der Kläranlage zeitlich gestreckt wird.

Ist jedoch beispielsweise bei einem Starkregenereignis die Menge des anfallenden Wassers so groß, daß diese nicht vom Rückhaltebecken und von der Zuflußseite 11 der Abwasseranlage 1 aufgenommen werden kann, steigt der Flüssigkeitsspiegel in der Zuflußseite 11 zunächst so lange an, bis er das Niveau N1 der Bodenfläche 15 der Zwischenwand 14 erreicht. Ein weiteres Ansteigen der Flüssigkeit auf der Zuflußseite 11 würde ohne weitere Maßnahmen dazu führen, daß Wasser an der Kläranlage vorbei in den Bereich der Abflußseite 12 der Abwasseranlage 1 gelangt, von wo aus dieses Wasser dann beispielsweise in ein natürliches Gewässer abgeleitet wird.

Um aber zu vermeiden, daß ungereinigtes Wasser beispielsweise in ein natürliches Gewässer gelangt, wird zwischen Zuflußseite 11 und Abflußseite 12 die Reinigungsvorrichtung 2 angeordnet. Diese ist beim Ausführungsbeispiel von Figur 1 als Siebrechen 22 ausgebildet, der mit parallel laufenden horizontal angeordneten Rechenstäben 23 in bekannter Weise in der Lage ist, Schmutzbestandteile aus dem ihn durchströmenden Wasser zurückzuhalten. Damit der Siebrechen 22 nicht verstopft, besitzt die Reinigungsvorrichtung 2 einen Rechenreiniger 24, in Figur 1 nur schematisch dargestellt, mit dessen Hilfe die Zwischenräume zwischen den Rechenstäben 23 kontinuierlich gereinigt werden und vor dem Rechen abgelagerte Schmutzbestandteile entfernt werden.

Bei einem Ausführungsbeispiel, wie in Figur 1 dargestellt, wird der vom Rechenreiniger 24 aus dem Siebrechen entfernte Schmutz in das Abwasser, welches sich in der Zuflußseite 11 befindet, zurückgeführt, da bei einem Zurückgehen des Wassers in der Abwasseranlage 1 dieser dann über die normale Reinigung durch die Kläranlage entsorgt werden kann. Neben der Reinigungsvorrichtung 2 ist es durch den Stand der Technik weiter bekannt, in Durchflußrichtung nach dem Siebrechen 22, d. h. also zwischen Reinigungsvorrichtung 2 und Abflußseite 12 ein Stauelement 3 vorzusehen, welches die Menge des zunächst zurückgehaltenen Wassers durch weiteres Aufstauen erhöhen soll, so daß möglichst wenig Wasser einer Reinigungswirkung durch die Kläranlage entzogen wird.

Figur 1 zeigt ein Stauelement 3, gemäß der vorliegenden Erfindung. Das Stauelement 3 ist in der Lage, die Aufstauhöhe der Flüssigkeit in der Zuflußseite 11 über das von der Zwischenwand 14 aufgestaute Niveau N1 bis auf ein darüberliegendes Niveau N2 aufzustauen. Ohne den Einsatz eines erfindungsgemäßen Stauelementes würde bei einer Stauhöhe N2, die der Höhe des Stauelementes 3 von Figur 1 entspricht, noch kein Wasser auf die Abflußseite 12 gelangen. Gemäß der vorliegenden Erfindung jedoch ist das Stauelement 3 derart beweglich gelagert, daß es, bewirkt durch die Kräfte des Staudruckes durch das Flüssigkeitsniveau N2, eine Schwenkbewegung um die Achse 7 vollführt. Dabei schwenkt die Teilfläche 320 des Stauelementes 3 in Richtung des Pfeiles P, d. h. weg von der Reinigungsvorrichtung 2 und gibt dadurch den Bereich zwischen der Achse 7 und der Bodenfläche 15 frei. Die Offen-Stellung des Stauelementes 3 ist in Figur 1 strichpunktiert eingezeichnet. Durch das erfindungsgemäße Wegklappen der Teilfläche 320 des Stauelementes 3 wird erreicht, daß im Bereich der Bodenfläche 15 Wasser über die Bodenfläche 15, mit hoher Geschwindigkeit, fließt, und dadurch die Bodenfläche 15 gereinigt wird. Das unterhalb der Achse 7 hindurchfließende Wasser gelangt auf die Abflußseite 12 der Abwasseranlage 1 und verläßt diese in Richtung beispielsweise eines natürlichen Gewässers. Durch die Ausbildung des Stauelementes 3 als mehrteiliges Stauelement wird erreicht, daß der oberhalb der Achse 7 sich befindende Teil des Stauelementes weiterhin das auf der Zuflußseite befindliche Wasser aufstaut. Dadurch kann das Wasser auf der Zuflußseite 11 weiterhin größtenteils zurückgehalten werden, und dank der erfindungsgemäßen Ausgestaltung des Stauelementes 3 trotzdem im Bereich der Bodenfläche 15 eine Strömung erzeugt werden, die die Bodenfläche 15 von Ablagerungen, wie Sand beispielsweise, reinigt, so daß diese Ablagerungen keine Störungen im Bereich des Siebrechens z. B. bei der Zusammenarbeit des Siebrechens 22 mit dem Rechenreiniger 24 verursachen.

Grundsätzlich wird versucht, die Abwasseranlage derart zu betreiben, daß möglichst das gesamte anfallende Wasser durch die nicht gezeigte Kanalleitung aus dem Bereich der Zuflußseite 11 abgeführt wird, um es in einer Kläranlage zu reinigen. Dem zufolge wird vorteilhaft das Stauelement 3 bzw. dessen Teilfläche 320 so ausgebildet, daß eine Öffnung des Stauelementes erst dann erfolgt, wenn sowieso durch den großen Wasseranfall auf der Zuflußseite 11 ein Überströmen des Stauelementes 3 an dessen Oberkante 36 stattfindet. Um dies zu bewerkstelligen, kann die Teilfläche 320 des Stauelementes 3 mit einer nicht gezeigten Feder derart vorgespannt werden, daß es dem Wasserdruck erst dann gelingt, die Teilfläche 320 um die Achse 7 zu schwenken, wenn ein genügender Staudruck des Wassers vorliegt, d. h. wenn praktisch das Flüssigkeitsniveau N2 erreicht ist.

Neben einer Belastung des Stauelementes 3 mit einer Feder, ist es auch möglich durch geschickte Massenverteilungen an der unterhalb der Achse 7 gelegenen Teilfläche 320 des Stauelementes 3 dafür zu sorgen, daß ein Moment auf diese Teilfläche 320 ausgeübt wird, so das sie dichtend an einem Anschlag 16 anliegt. Eine weitere Erhöhung des Wasserniveaus auf der Zuflußseite 11 beispielsweise bis über das Niveau N2 wäre dann bei entsprechender Ausgestaltung der auf die Teilfläche 320 wirkenden Kräfte, in der Lage, diese zu verschwenken und damit den Durchfluß von Wasser freizugeben.

Das bei Figur 1 gezeigte Stauelement 3 ist im Bereich seiner Teilfläche 320, also als eine um die Achse 7 schwenkbare Klappe ausgebildet, mit deren Hilfe die von der Erfindung beabsichtigten Effekte erzielt werden können. Neben einer um die Achse 7 schwenkbaren Klappe ist es besonders vorteilhaft ebenso möglich die Teilfläche 320 als ein elastisch verformbares Bauteil auszubilden, beispielsweise in Form einer Dichtlippe, das in der Lage ist durch seine Verformung die Freigabe des Durchflußes der Flüssigkeit im Bereich der Bodenfläche 15 zu bewirken. Bei geringerem Flüssigkeitsdruck auf das elastisch verformbare Bauteil, bewirken dessen Verformungs-Rückstellkräfte, daß es dichtend am Anschlag 16 der Abwasseranlage 1 anliegt, so daß diese mit Hilfe ihres Stauelementes 3 eine größere Menge Wasser auf der Zuflußseite 11 zurückhalten kann, bevor dieses in ein beispielsweise natürliches Gewässer abgeleitet werden muß.

Die in der Abwasseranlage 1 anfallenden Verunreinigungen des Wasser, die mit dem Regenwasser und dem damit vermischten Abwasser in den Bereich der Zuflußseite 11 gelangen, werden in bekannter Weise von einer Reinigungsvorrichtung 2 zurückgehalten, wenn das Wasser in der Abwasseranlage 1 von der Zuflußseite 11 direkt auf die Abflußseite 12 gelangt. Die Reinigungsvorrichtung 2 ist als Siebrechen 22 ausgestaltet, und besteht im wesentlichen aus horizontal übereinander angeordneten Rechenstäben, beispielsweise mit einer Spaltbreite zwischen den Rechenstäben von 3 mm bis 11 mm. Für das Freihalten der Zwischenräume zwischen den einzelnen Rechenstäben und von dem auf der Zuflußseite des Rechens im Bereich der Rechenstäbe durch die Strömung der Flüssigkeit angedrückten Schmutzbestandteilen, besitzt der Siebrechen 22 einen Rechenreiniger 24, der fahrbar ausgebildet ist und auf der der Abflußseite 12 zugewandten Seite des Siebrechens 22 angeordnet.

Der Rechenreiniger 24 fährt zum reinigen entlang dem Siebrechen 22 und greift dabei mit Reinigungselementen in die Zwischenräume zwischen die Rechenstäbe 23. Der Zwischenraum zwischen den Rechenstäben 22 wird dabei von den Reinigungselementen 22 des Rechenreinigers 24 ausgefüllt, so daß dazwischen befindliche Schmutzbestand teile, beispielsweise Sandkörner, die Bewegung des Rechenreinigers wesentlich erschweren und je nach Härte der Schmutzbestandteilchen zu Verschleiß an den Rechenstäben und insbesondere an den Reinigungselementen des Rechenreinigers 24 führen können. Besonders kritisch ist dies im Bereich der Bestandteile der Reinigungsvorrichtung 2 die sich in Nähe der Bodenfläche 15 befinden. Auf dieser nämlich setzen sich Schwebteilchen bevorzugt ab, insbesondere wenn der Wasserstand auf der Zuflußseite 11 nur wenig höher als das Niveau N1 ist, bis hin zu einem Wasserstand im Bereich von N2, da bis dahin keinerlei Strömung im Bereich zwischen dem Stauelement 3 und der Reinigungsvorrichtung 2 vor sich geht. Durch das Hin- und Herfahren des Rechenreinigers 24 wird dann gerade immer soviel der Sinkstoffe aufgewirbelt, daß deren schädlicher Einfluß zum Tragen kommt, da sie dabei in den Bereich des Rechenreinigers gelangen

Neben den positiven Auswirkungen einer erfindungsgemäßen Abwasseranlage 1, wie sie in Figur 1 mit ihrem erfindungsgemäßen Stauelement 3 dargestellt ist, hat die vorliegende Erfindung den weiteren Vorteil, daß bei einem Starkregenereignis mit großem Anfall von Schmutzwasser auf der Zuflußseite 11, der Durchfluß des anströmenden Wassers durch den Siebrechen 22 auf dessen gesamte Oberfläche verteilt wird, wenn bei einem solchen Ereignis das Stauelement 3 den Durchfluß, und sei es nur teilweise wie beim Ausführungsbeispiel von Figur 1.

Figur 3 zeigt eine Prinzipdarstellung mit einem Stauelement 3, welches aus zwei Teilflächen 320 besteht, die um eine zwischen ihnen verlaufende horizontale Achse 7 schwenkbar gelagert sind. Um ein wirkungsvolles Stauelement zu bilden, sind mehrere der in Figur 3 dargestellten Klappelemente 37 entlang der Rückseite der Reinigungsvorrichtung 2 angeordnet. Die einzelnen Klappelemente, die das Stauelement 3 bilden, besitzen einen Anlenkhebel (nicht dargestellt), über den sie beispielsweise über eine Steuerstange von der Offen- in die Geschlossen-Stellung geschwenkt werden können. Die dazu notwendige Antriebsenergie kann beispielsweise durch geeignete Kraftübertragungsmittel über das aufgestaute oder das strömende Wasser erzeugt werden. Es ist darüber hinaus aber auch vorteilhaft möglich, die Klappelemente 37, beispielsweise über eine Hydraulik oder einen Elektromotor, von der Offen- in die Geschlossen-Stellung und umgekehrt überzuführen. Diese Ausgestaltung des Stauelements hat den Vorteil, daß zum Bewegen der Klappelemente nur relativ geringe Kräfte, unabhängig von der Wasserstandshöhe, erforderlich sind.

Figur 4 zeigt ein weiteres vorteilhaftes Ausführungsbeispiel der vorliegenden Erfindung, wobei ebenfalls ein mehrteiliges Stauelement 3 in Durchflußrichtung des Wassers hinter einer Reinigungsvorrichtung 2 angeordnet ist. Das Stauelement 3 besteht aus einer fest in der Abwasseranlage 1 installierten Teilfläche 32 und einer ebenfalls quer zur Durchflußrichtung des strömenden Mediums beweglich angeordneten Teilfläche 320. Im Ausführungsbeispiel von Figur 4 ist die beweglich angeordnete Teilfläche 320 an der fix in der Abwasseranlage 1 angeordneten Teilfläche 32 auf der der Reinigungsvorrichtung 2 abgewandten Seite angeordnet. Eine Anordnung der beweglichen Teilfläche 320 in Strömungsrichtung vor oder nach dem fix angeordneten Teil des Stauelementes 3 macht keinen prinzipiellen Unterschied, sondern hängt von den praktischen Gegebenheiten, wie z. B. Gleit- und Führungsflächen für die bewegliche Teilfläche 320 ab. Ebenso wie bei dem Stauelement 3 beim Ausführungsbeispiel von Figur 3 ist hier zu einer Verschiebung der beweglichen Teilfläche 320 vorzugsweise eine mit Fremdenergie arbeitende Antriebsvorrichtung vorzusehen. Gleichwohl ist es ebenfalls denkbar, das Öffnen und Schließen der beweglichen Teilfläche 320 über des aufgestauten oder strömenden Wassers mit Hilfe geeigneter Mittel, beispielsweise Schwimmer oder Leitflächen, zu bewerkstelligen.

Figur 6 zeigt einen Ausschnitt einer Prinzipdarstellung ähnlich von Figur 1. Das Stauelement 3 ist in eine fest installierte Teilfläche 32 und eine bewegliche Teilfläche 320 unterteilt. Das Stauelement 3 ist ebenfalls in Durchflußrichtung S hinter einer Reinigungsvorrichtung 2 angeordnet. Die bewegliche Teilfläche 320 des Stauelementes 3 schließt in ihrer Geschlossen-Stellung den Bereich zwischen der Bodenfläche 15 und der feststehenden Teilfläche 32 des Stauelementes 3 ab. Dazu ist die bewegliche Teilfläche 320 von einer Antriebsvorrichtung 8 beaufschlagt, die die bewegliche Teilfläche 320 auf die Bodenfläche 15 drückt, so daß eine Abdichtung stattfindet. Zum Öffnen und Schließen der beweglichen Teilfläche 320 ist es vorgesehen, daß die Antriebsvorrichtung 8 über eine Steuervorrichtung 81 mit Steuersignalen und Antriebsenergie versorgt wird. Die Steuervorrichtung 81 ist über Steuerleitungen 82 mit Sensoren 83 verbunden, mit deren Hilfe die Höhe des Flüssigkeitsstandes vor dem Stauelement 3 gemessen werden kann. Die Messung erfolgt dabei in bekannter Weise, beispielsweise über die Messung des Druckes oder optisch. Mit Hilfe dieser vorteilhaften Ausgestaltung der Erfindung ist es also möglich, die bewegliche Teilfläche 320 je nach Höhe des angestauten Wassers zu öffnen oder zu schließen.

Darüber hinaus kann mit Hilfe der Steuervorrichtung 81, aber auch ein Öffnen und Schließen des Stauelementes 3 in Abhängigkeit von Zeitabläufen gesteuert werden. Damit ist es möglich in regelmäßigen Abständen dafür zu sorgen, daß die Bodenfläche 15 und damit die Reinigungsvorrichtung 2 bzw. deren Rechenreiniger regelmäßig so durchspült und überspült werden, daß abgesetzte Sinkstoffe aus ihrem Bereich abgeführt werden. Selbstverständlich ist es dazu Voraussetzung, daß die Wassermenge in der Zuflußseite 11 eine genügende Stauhöhe erreicht hat, so daß ein Fließen von Wasser über die Bodenfläche 15 überhaupt möglich ist. Selbstverständlich ist es auch möglich eine Sensorsteuerung und eine Zeitsteuerung zu kombinieren oder eine Reinigung der Bodenfläche 15 durch manuellen Eingriff zu ermöglichen.

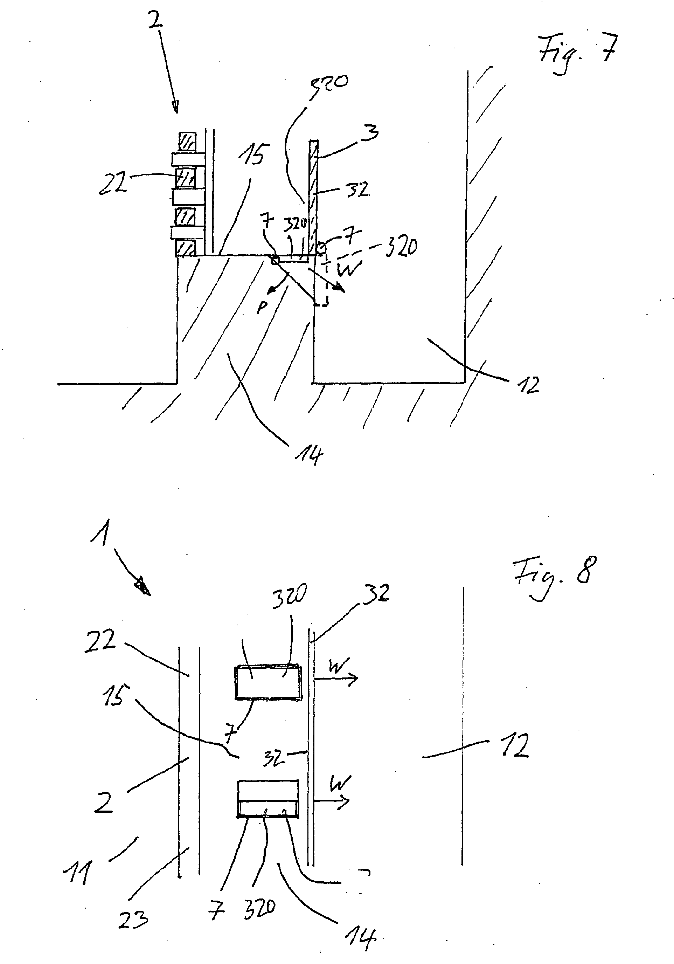

Figur 7 zeigt eine Prinzipdarstellung einer erfindungsgemäßen Abwasseranlagen, ähnlich der von Figur 1. Bei der Abwasseranlage von Figur 7 ist das Stauelement 3 ebenfalls mehrteilig ausgebildet, wobei das Stauelement 3 aus zwei getrennten Bauteilen 32, 320 besteht von denen eines, das schwenkbar gelagerte, in der Ebene der Bodenfläche 15 um die Achse 7 schwenkbar angeordnet ist. Die bewegliche Teilfläche 320 ist in ihrem geschossenen Zustand praktisch mit der Bodenfläche 15 in einer Ebene liegend ausgebildet. Bei wachsendem Staudruck des Wasser, das sich am Stauelement 3 aufstaut, beginnt die bewegliche Teilfläche 320 des Stauelements 3 in Richtung des Pfeiles P nach unten um die Achse 7 zu schwenken und öffnet den Durchfluß des Wassers unterhalb der feststehenden Teilfläche des Stauelements 3 hindurch in Richtung des Pfeiles W. In seiner Geschlossenstellung wird die bewegliche Teilfläche 320 durch nicht gezeigte elastische Elemente gehalten. Deren Andrückkraft wird durch eine bestimmte Stauhöhe des Wassers vor dem Stauelement 3 überwunden, so daß der Durchfluß in Richtung des Pfeiles W erfolgt. Die Zwischenwand 14 ist entsprechend ausgestaltet, so daß diese die bewegliche Teilfläche 320 aufnehmen kann.

Mit unterbrochener Linie dargestellt ist eine andere Ausführungsform, bei der die bewegliche Teilfläche 320 im wesentlichen unterhalb der Bodenfläche 15 angeordnet ist, wenngleich ihre Achse 7 ebenfalls im wesentlichen in der Höhe der Bodenfläche 15 verläuft.

Figur 8 zeigt einen Ausschnitt einer erfindungsgemäßen Vorrichtung 1 in der Draufsicht auf die Bodenfläche 15 mit darin angeordneten beweglichen Teilflächen 320 eines Stauelements 3, das aus mehreren Teilflächen besteht. In der Draufsicht ist der oberste Rechenstab 23 eines Siebrechens 22 erkennbar sowie die Draufsicht auf die beweglichen Teilflächen 320 des Stauelements 3, dessen Draufsicht durch zwei parallele Linien dargestellt ist. Rechts vom Stauelement 3 ist die Draufsicht auf die Abflußseite 12 erkennbar. Die oben dargestellte bewegliche Teilfläche 320 ist in ihrer Geschlossenstellung dargestellt, während die unten gezeigte bewegliche Teilfläche 320 um die Achse 7 verschwenkt ist, so daß sie in ihrer Halboffenstellung dargestellt ist. Die Zwischenwand 14 ist ähnlich wie bei Figur 7 mit einer Durchbrechung versehen, durch die das Wasser hindurch in Richtung der Pfeile W in die Abflußseite 12 der Abwasseranlage 1 gelangt. Wie aus Figur 8, insbesondere an der unten dargestellten beweglichen Teilfläche 320 deutlich wird, ist die Achse 7 im wesentlichen senkrecht im Verhältnis zur Reinigungsvorrichtung 2 angeordnet.

Neben der genannten Ausführungsform können ebenso gut andere Reinigungsvorrichtungen, die nicht auf einem Prinzip des Siebrechens beruhen, in einer Abwasseranlage gemäß der Erfindung Verwendung finden. Die Erfindung ermöglicht, unabhängig von der Ausführungsform der einzelnen Elemente, derart in eine Abwasseranlage einzugreifen, daß durch das Ermöglichen des Durchflusses von Wasser von der Zuflußseite 11 auf die Abflußseite, die Nachteile des Standes der Technik vermieden werden.

## Patentansprüche

1. Abwasseranlage mit einer Zuflussseite für verunreinigtes Wasser und einer Abflussseite für gereinigtes Wasser und einer dazwischen sich von einer Bodenfläche aus erstreckenden Reinigungsvorrichtung zum Zurückhalten oder Ausscheiden von auf der Zuflussseite zugeführten Verunreinigungen und einem in Fliessrichtung nach der Reinigungsvorrichtung im Bereich der Bodenfläche angeordneten Stauelement, wobei das Stauelement (3) im Bereich der Bodenfläche (15) mit dieser wenigstens teilweise lösbar in Verbindung steht und das Stauelement (3) beweglich gelagert oder elastisch verformbar ist, wobei mittels des Stauelements (3) das Wasser bis zu einer Stauhöhe (N2) aufstaubar ist;
**dadurch gekennzeichnet, dass**
zwischen Reinigungsvorrichtung (2) und Stauelement (3) ein Sammelraum (21) für Sink- oder Schwebstoffe angeordnet ist; und
das Stauelement (3) mehrteilig ausgebildet ist aus einer fest installierten Teilfläche (32) und einer beweglich ausgebildeten Teilfläche (320);
wobei bei großem Zulauf an verunreinigtem Wasser und bei Überschreiten der Stauhöhe (N2) Wasser über die Oberkante der fest installierten Teilfläche (32) zur Abflussseite abfließt,
wobei mittels des Stauelements (3) das Wasser bis zum Erreichen der Stauhöhe (N2) durch die fest installierten Teilfläche (32) zurückgehalten wird und durch Bewegen der beweglich ausgebildeten Teilfläche zeitweise eine Freigabe des Durchflusses im Bereich der Bodenfläche (15) von der Zuflussseite zur Abflussseite ermöglicht wird, und
wobei die beweglich ausgebildete Teilfläche (320) zwischen einer Schwenkachse (7) und der Bodenfläche (15) angeordnet ist, schwenkbar gelagert oder elastisch verformbar ist, und beim Schwenken von der Reinigungsvorrichtung (2) wegschwenkt und die fest installierte Teilfläche (32) oberhalb der Schwenkachse (7) angeordnet ist, oder
die beweglich ausgebildete Teilfläche (320) quer zur Durchflussrichtung verschieblich ist und im geschlossenen Zustand zwischen der von der Bodenfläche beabstandeten, fest installierten Teilfläche (32) und der Bodenfläche (15) angeordnet ist.

2. Abwasseranlage nach Anspruch 1, **dadurch gekennzeichnet, dass** die Achse (7) im wesentlichen horizontal oder parallel zur Bodenfläche (15) und mit Abstand zur Bodenfläche (15) verläuft.

3. Abwasseranlage nach Anspruch 1 oder 2, **dadurch gekennzeichnet, dass** die beweglich ausgebildete Teilfläche (320) als mittels Staudruck öffenbare Klappe ausgebildet ist.

4. Abwasseranlage nach Anspruch 3, **dadurch gekennzeichnet, dass** die Klappe aus metallischem Werkstoff ausgebildet ist.

5. Abwasseranlage nach einem oder mehreren der Ansprüche 1 bis 4, **dadurch gekennzeichnet, dass** eine Steuervorrichtung (81) zur Steuerung des Stauelements (3) vorgesehen ist.

6. Abwasseranlage mit einer Zuflussseite für verunreinigtes Wasser und einer Abflussseite für gereinigtes Wasser und einer dazwischen sich von einer Bodenfläche aus erstreckenden Reinigungsvorrichtung zum Zurückhalten oder Ausscheiden von auf der Zuflussseite zugeführten Verunreinigungen und einem in Fliessrichtung nach der Reinigungsvorrichtung im Bereich der Bodenfläche angeordneten Stauelement, wobei das Stauelement (3) im Bereich der Bodenfläche (15) mit dieser wenigstens teilweise lösbar in Verbindung steht und das Stauelement (3) beweglich gelagert oder elastisch verformbar ist,
**dadurch gekennzeichnet, dass**
das Stauelement (3) mehrteilig ausgebildet ist,
eine Teilfläche (320) des Stauelements (3) in der Ebene der Bodenfläche (15) zur zeitweisen Freigabe des Durchflusses im Bereich der Bodenfläche (15) angeordnet ist, und
eine feststehende Teilfläche (32) des Stauelements im Bereich oberhalb der beweglichen Teilfläche (320) angeordnet ist.

7. Abwasseranlage nach Anspruch 6, **dadurch gekennzeichnet, dass** das Stauelement (3) um eine Achse (7) schwenkbar gelagert ist, die in der Ebene der Bodenfläche (15) oder unterhalb der Bodenfläche (15) verläuft.

8. Abwasseranlage nach Anspruch 6 oder 7, **dadurch gekennzeichnet, dass** die Achse (7) im wesentlichen senkrecht zur Reinigungsvorrichtung (2) verläuft.

## Claims

1. Waste-water installation having an inflow side for contaminated water and an outflow side for cleaned water and a cleaning device extending between them from a bottom area for retaining or separating impurities delivered on the inflow side and a damming element arranged in the direction of flow after the cleaning device in the region of the bottom area, wherein the damming element (3) communicates in an at least partially detachable manner in the region of the bottom area (15) with the latter and the damming element (3) is movably supported or elastically deformable, wherein the water can be dammed up to a damming height (N2) by means of the damming element (3);
**characterized in that**
between the cleaning device (2) and the damming element (3) a collecting area (21) is arranged for sinking material or suspended material; and
the damming element (3) is formed of several parts including a fixedly mounted partial surface (32) and a moveably formed partial surface (320);
wherein at high inflow of contaminated water and when exceeding the damming height (N2) water discharges over the upper edge of the fixedly mounted partial surface (32) to the outflow side,
wherein by means of the damming element (3) the water is retained until reaching the damming height (N2) by means of the fixedly mounted partial surface (32), and by means of moving the moveably formed partial surface a release of the flowthrough in the region of the bottom area (15) from the inflow side to the outflow side is temporarily enabled, and
wherein the moveably formed partial surface (320) is arranged between a pivoting shaft (7) and the bottom area (15), is pivotably mounted or elastically deformable, and pivots away from the cleaning device (2), and the fixedly mounted partial surface (32) is arranged above the pivoting shaft (7), or
the moveably formed partial surface (320) can be shifted across the flowthrough direction and is arranged in the closed position between the bottom area (15) and the fixedly mounted partial surface (32) which is spaced apart from the bottom area.

2. Waste-water installation according to claim 1, **characterized in that** the shaft (7) runs substantially horizontally or parallel to the bottom area (15) and with a clearance from the bottom area (15).

3. Waste-water installation according to claims 1 or 2, **characterized in that** the moveably formed partial surface (320) is formed as a flap that can be opened by means of dynamic pressure.

4. Waste-water installation according to claim 3, **characterized in that** the flap is formed of metallic material.

5. Waste-water installation according to one or more of claims 1 to 4, **characterized in that** a control device (81) is provided for controlling the damming element (3).

6. Waste-water installation having an inflow side for contaminated water and an outflow side for cleaned water and a cleaning device extending between them from a bottom area for retaining or separating impurities delivered on the inflow side and a damming element arranged in the direction of the flow after the cleaning device in the region of the bottom area, wherein the damming element (3) communicates at least partially in a detachable manner in the region of the bottom area (15) with the latter and the damming element (3) is moveably supported or elastically deformable,
**characterized in that**
the damming element (3) is formed of several parts,
a partial surface (320) of the damming element (3) is arranged in the plane of the bottom area (15) for temporarily releasing the flowthrough in the region of the bottom area (15), and
a fixed partial surface (32) of the damming element is arranged in the region above the moveable partial surface (320).

7. Waste-water installation according to claim 6, **characterized in that** the damming element (3) is pivotably supported at a shaft (7) running in the plane of the bottom area (15) or below the bottom area (15).

8. Waste-water installation according to claims 6 or 7, **characterized in that** the shaft (7) runs substantially vertically to the cleaning device (2).

## Revendications

1. Installation d'évacuation d'eaux usées, avec un côté de flux entrant pour de l'eau souillée et un côté de flux sortant pour de l'eau nettoyée, et avec un dispositif de nettoyage s'étendant entre les deux à partir d'une surface de fond et destiné à retenir ou séparer les impuretés apportées côté flux entrant, et avec un élément de retenue disposé dans la région de la surface de fond (15), après le dispositif de nettoyage dans la direction d'écoulement, sachant que l'élément de retenue (3) est, dans la région de la surface de fond (15), relié de manière au moins partiellement amovible à celle-ci, et que l'élément de retenue (3) est monté à déplacement ou est élastiquement déformable, l'élément de retenue (3) permettant de retenir l'eau jusqu'à une hauteur de retenue (N2),
**caractérisée en ce que**
un espace d'accumulation (21) pour des matières en suspension ou décantables est disposé entre le dispositif de nettoyage (2) et l'élément de retenue (3) ;
et l'élément de retenue (3) est réalisé en plusieurs parties, en étant constitué d'une surface partielle (32) fixement installée et d'une surface partielle (320) conçue mobile ;
sachant qu'en cas d'afflux important d'eau souillée et de dépassement de la hauteur de retenue (N2), de l'eau s'écoule vers le côté de flux sortant par-dessus le bord supérieur de la surface partielle (32) fixement installée,
sachant que l'élément de retenue (3) retient l'eau par la surface partielle (32) fixement installée jusqu'à l'atteinte de la hauteur de retenue (N2), et le déplacement de la surface partielle conçue mobile permet une libération temporaire de l'écoulement du côté de flux entrant vers le côté de flux sortant dans la région de la surface de fond (15),
et sachant que la surface partielle (320) conçue mobile est disposée entre un axe de pivotement (7) et la surface de fond (15), est montée à pivotement ou est élastiquement déformable et est lors du pivotement pivotée en éloignement du dispositif de nettoyage (2),
ou que la surface partielle (320) conçue mobile est coulissante transversalement à la direction d'écoulement et est disposée dans l'état fermé entre la surface de fond (15) et la surface partielle (32) fixement installée, distante de la surface de fond.

2. Installation d'évacuation d'eaux usées selon la revendication 1, **caractérisée en ce que** l'axe (7) s'étend sensiblement horizontalement ou parallèlement à la surface de fond (15) et à distance de la surface de fond (15).

3. Installation d'évacuation d'eaux usées selon la revendication 1 ou 2, **caractérisée en ce que** la surface partielle (320) conçue mobile est réalisée sous forme de volet pouvant s'ouvrir par la pression d'accumulation.

4. Installation d'évacuation d'eaux usées selon la revendication 3, **caractérisée en ce que** le volet est réalisé en matériau métallique.

5. Installation d'évacuation d'eaux usées selon une ou plusieurs des revendications 1 à 4, **caractérisée en ce qu'**il est prévu un dispositif de commande (81) pour la commande de l'élément de retenue (3).

6. Installation d'évacuation d'eaux usées, avec un côté de flux entrant pour de l'eau souillée et un côté de flux sortant pour de l'eau nettoyée, et avec un dispositif de nettoyage s'étendant entre les deux à partir d'une surface de fond et destiné à retenir ou séparer les impuretés apportées côté flux entrant, et avec un élément de retenue disposé dans la région de la surface de fond après le dispositif de nettoyage dans la direction d'écoulement, sachant que l'élément de retenue (3) est, dans la région de la surface de fond (15), reliée de manière au moins partiellement amovible à celle-ci, et que l'élément de retenue (3) est monté à déplacement ou est élastiquement déformable,
**caractérisée en ce que**
l'élément de retenue (3) est réalisé en plusieurs parties,
une surface partielle (320) de l'élément de retenue (3) est disposée dans le plan de la surface de fond (15) pour libérer temporairement l'écoulement dans la région de la surface de fond (15),
et une surface partielle (32) de l'élément de retenue est disposée dans la région située au-dessus de la surface partielle mobile (320).

7. Installation d'évacuation d'eaux usées selon la revendication 6, **caractérisée en ce que** l'élément de retenue (3) est monté à pivotement autour d'un axe (7) qui s'étend dans le plan de la surface de fond (15) ou en dessous de la surface de fond (15).

8. Installation d'évacuation d'eaux usées selon la revendication 6 ou 7, **caractérisée en ce que** l'axe (7) s'étend perpendiculairement au dispositif de nettoyage (2).
